# EUROPEAN PATENT SPECIFICATION

(11) **EP 2 615 001 B1**
(45) Date of publication and mention of the grant of the patent: **11.10.2017**
(21) Application number: 12196927.3
(22) Date of filing: 13.12.2012
(51) Int. Cl.: B60R 25/10

(54) **Device and method for detecting the abnormal removal of fuel from a fuel tank**
Vorrichtung und Verfahren zur Erkennung abnormaler Entfernung von Kraftstoff aus einem Kraftstofftank
Dispositif et procédé pour détecter le retrait anormal de carburant d'un réservoir de carburant

(30) Priority: 12.01.2012 SE 1250012
(43) Date of publication of application: 17.07.2013
(73) Proprietor: Scania CV AB, 151 87 Södertälje (SE)
(72) Inventor: Wallebäck, Peter, 112 47 Stockholm (SE); Sundell, Peter, 632 21 Eskilstuna (SE); Popescu, Daniel, 645 97 Stallarholmen (SE)
(74) Representative: Thum, Bernhard

(56) References cited:
- WO-A1-2009/147320
- FR-A1- 2 476 354
- GB-A- 2 338 308
- GB-A- 2 469 336
- US-A- 3 925 756

## Description

### TECHNICAL FIELD

The present invention relates to a method for detecting the abnormal removal of fuel from a fuel tank of a motor vehicle according to the preambles of claims 1 and 10.

The invention also relates to a device for detecting the abnormal removal of fuel from a fuel tank of a motor vehicle and a motor vehicle equipped with the device.

### BACKGROUND

Motor vehicles equipped with a combustion engine often have a tank for holding fuel, such as petrol, ethanol or diesel. It has been evident for many years that this fuel is vulnerable to theft and various solutions have been put forward for detecting or preventing theft of said fuel.

One method of stealing the fuel involves perpetrators opening or breaking open a tank lock to facilitate the removal of fuel using a tube. Another method involves perpetrators drilling a hole in the tank, similarly facilitating the removal of fuel using a tube.

One system for detecting the abnormal removal of fuel from the tank, such as in the event of fuel theft, comprises a so-called float gauge adapted to detect an existing fuel level in the tank. The float gauge is adapted to communicate with a control unit. Said control unit is adapted with a logic system to determine an existing residual fuel quantity based on said detected fuel level and information, e.g. on the tank's geometric configuration. Said control unit is adapted to determine whether fuel has been removed from the tank in an abnormal way, based on information on an existing fuel level in the tank at different times. Said fuel gauges currently lack logic systems to determine whether fuel has been removed from the tank in an abnormal way.

The control unit is adapted to communicate with an existing alarm system in the vehicle. In the event that the control unit has determined that the fuel has been removed in an abnormal way, a signal is sent to the alarm system to take the appropriate action.

In this context, it is important to note that the control unit must be activated by connecting it to a power supply to enable processing of the information received from the float gauge. This naturally involves a certain amount of energy consumption. It is desirable to minimise electricity consumption in vehicles, in particular when the vehicle is switched off. It is also desirable to be able to determine whether fuel is being removed in an abnormal way when the vehicle is switched off.

GB 2469336 describes a system for triggering an alarm in the event of fuel theft. The alarm can be activated automatically when the vehicle's ignition is switched off and a predetermined time has elapsed enabling the fuel to reach a rest position. For this purpose, an alarm/data ECU is adapted to determine whether fuel has been removed in an abnormal way.

GB 2338308 describes a device for monitoring a rate of change of a fluid level to detect fuel theft or leakage in a vehicle. For this purpose, a device 5 is arranged between a fuel-level transmitter and a fuel-level indicator in the vehicle's cab. The device 5 is adapted to determine whether fuel has been removed in an abnormal way, based on information on the fuel level from the fuel-level transmitter.

Document WO 2009/147320 A1 discloses a device for monitoring the fuel level in the tank of a vehicle where a hydraulic pressure sensor is provided within the fuel tank in order to permanently detect the hydraulic pressure of the fuel tank. The sensor permanently transmits a pressure signal to a superordinate processor. The processor is also provided with an additional signal concerning the vehicle state and activates an alarm system in case of an abnormal loss of fuel.

Document FR 2 476 354 discloses an integrated fuel sensor system having an alarm. This system includes a delay circuit fot activating the alarm with a time delay after the vehicle has been stopped.

Further prior art documents are US 3,925,756 and GB 2469336 A.

### SUMMARY OF THE INVENTION

There is a need to find a reliable way to improve the ability to stop an ongoing fuel theft.

There is a need to introduce a robust method for triggering an alarm in the event of fuel theft, where the fuel in a fuel tank of a motor vehicle is removed in an abnormal way.

An object of the present invention is to propose a novel and advantageous method for detecting the abnormal removal of fuel from a fuel tank of a motor vehicle.

Another object of the invention is to propose a novel and advantageous device ; for detecting the abnormal removal of fuel from a fuel tank of a motor vehicle.

A further object of the invention is to propose an alternative method, and an alternative device for achieving detection of the abnormal removal of fuel from a fuel tank of a motor vehicle.

A further object of the invention is to propose a method, and a device
for triggering an alarm in a reliable way if the abnormal removal of fuel from a fuel tank of a motor vehicle is being carried out or has been carried out, in particular when the vehicle is switched off.

These objects are achieved with a method for detecting the abnormal removal of fuel from a fuel tank of a motor vehicle, according to claim 1.

According to one embodiment, the alarm system can be resting, i.e. switched off, and activated by means of a signal from the non-mechanical level sensor. According to another embodiment, the alarm system can be active and adapted to follow preset routines when a signal is received from the non-mechanical level sensor.

For this purpose, the non-mechanical level sensor is
equipped with the necessary logic system to both determine an existing fuel quantity and to determine whether changes in the fuel quantity are occurring in an abnormal way.

This does not require information, e.g. on maximum tank volume or the fuel tank's geometric configuration, to be stored in a memory of the alarm system or other control unit.

By providing a separate communication link between the non-mechanical level sensor and the alarm system, the logic system for determining changes over time to an existing fuel level and the logic system for determining whether alarms should be triggered or not, can be separated.

In this way, a function for indicating fuel theft, which can be activated as required and not only when the vehicle (the vehicle's ignition) is switched off, is also achieved, which results in a versatile method according to one aspect of the invention.

One advantage of the method according to one aspect of the invention is that the risk of false alarms can be minimised in that the alarm system takes account of other information, which information can comprise, e.g. information on prevailing operating conditions in the vehicle, information on a change in the vehicle's angle of tilt, information on prevailing conditions in a fuel warming device in the vehicle.

The method can further comprise the step of detecting said fuel level by means of an ultrasonic sensor. In this way, a precise method for determining whether fuel theft is being carried out can be achieved. In this way, a method for determining whether a fuel theft is being carried out is also advantageously achieved, in which a control unit used according to the state of the art for this purpose, can be switched off.

The method can further comprise the step of continuously transmitting said signal. In this way, a fairly precise method for determining whether fuel theft is being carried out is achieved. In this way, an alarm can be triggered relatively quickly after a fuel theft is initiated, hopefully interrupting the theft at an early stage and thereby minimising financial losses.

Said signal can only comprise the result of said determination. In this way, a method according to one aspect of the invention is achieved, in that a minimum amount of information is collated in said signal, resulting in a rapid and effective solution which is not calculation-heavy.

Said signal can be encrypted. In this way, a method according to one aspect of the invention is achieved, which is secure to the extent that a person intending to steal fuel from the tank and at the same time deceive the alarm system to prevent an alarm being triggered will find it difficult to establish a so-called theft coupling.

The method further comprises the step of sending said signal direct to said alarm system. In this way, the effect is achieved that the control unit(s), comprising, according to state of the art solutions, e.g. a float gauge, which are used to determine the extent to which a change in the fuel quantity in the tank has occurred in an abnormal way, can be deactivated, thereby reducing electricity consumption. In this way, a rapid and secure way of transferring information from the fuel-level sensor to the alarm system is also achieved.

Said signal can comprise information on changes in said fuel quantity per unit of time. In this way, an effective basis is achieved enabling the alarm system to decide whether an alarm should be triggered, and if so, which alarm. In this way, an improved alarm system is achieved which can more effectively determine whether alarms should be triggered or not. In this way, the risk of false alarms, e.g. caused by leakage in the fuel tank can be minimised.

The method can further comprise the step of determining whether alarms should be triggered using the alarm system. According to one aspect of the invention, the fuel-level sensor can advantageously be adapted to determine whether a fuel quantity in the fuel tank is being changed in an abnormal way. In this way, the alarm system does not need to include said logic systems or said drive routines, enabling the design of the alarm system to be less complex in this regard.

The method can further comprise the step of triggering alarms by means of sound and/or light in the vehicle. In this way, any ongoing theft of fuel can be efficiently detected. In this way, the attention of the general public or of persons belonging to appropriate professional groups, such as guards, can also be effectively and reliably attracted.

The method can further comprise the step of triggering alarms by means of a signal to an alarm configuration arranged at a distance from the vehicle. Said signal can comprise information on the vehicle's position. In this way, guards and/or police officers can be quickly, reliably and effectively directed to the vehicle's position.

The method is easy to implement in existing motor vehicles. Software for detecting the abnormal removal of fuel from a fuel tank of a motor vehicle is
installed in advance in the fuel-level sensor of the vehicle during its manufacture. Software comprising programme code for carrying out the innovative method is installed in the fuel-level sensor and the alarm system in the vehicle during a software upgrade at a service station. In this case, the software can be loaded into a memory in the fuel-level sensor and/or alarm system. Implementation of the innovative method is therefore cost-effective.

Software that incorporates programme code for detecting the abnormal removal of fuel from a fuel tank of a motor vehicle can be easily be updated or replaced. Different components of the software which comprise programme code for carrying out the innovative method can also be replaced independently of one another. This modular configuration is advantageous from a maintenance perspective.

According to one aspect of the invention, a device is proposed for detecting the abnormal removal of fuel from a fuel tank of a motor vehicle, according to claim 10.

The device can further comprise:
- elements for detecting said fuel level using an ultrasonic sensor.

The device can further comprise:
- elements for continuously transmitting said signal.

Said signal can only comprise the result of said determination.

The device can further comprise:
- elements for encrypting said signal.

The device further comprises:
- elements for sending said signal direct to said alarm system.

The device can further comprise:
- elements for determining information on changes in said fuel quantity per unit of time, and
- elements for collating said information in said signal.

Said alarm system can be adapted to determine whether alarms should be triggered.

The device can further comprise:
- elements for triggering alarms by means of sound and/or light in the vehicle.

The device can further comprise:
- elements for triggering alarms by means of a signal to an alarm configuration arranged at a distance from the vehicle.

The above objects are also achieved with a motor vehicle comprising the device. The motor vehicle can be a truck, bus, car, dump truck or crane truck.

The motor vehicle can be a bucket loader, forestry machine or a vehicle adapted for operation in a mine.

### BRIEF DESCRIPTION OF THE DRAWINGS

For a more complete understanding of the present invention and further objects and advantages thereof, the detailed description set out below should be read together with the accompanying drawings, in which the same reference notations denote similar items in the various drawings, and in which:
Figure 1 illustrates schematically a vehicle according to one embodiment of the invention;
Figure 2 illustrates schematically a subsystem for the vehicle depicted in Figure 1, according to one embodiment of the invention;
Figure 3a illustrates schematically flowchart of a method according to one embodiment of the invention;
Figure 3b illustrates schematically in further detail a flowchart of a method according to one embodiment of the invention; and
Figure 4 illustrates schematically a computer according to one embodiment of the invention.

### DETAILED DESCRIPTION OF THE DRAWINGS

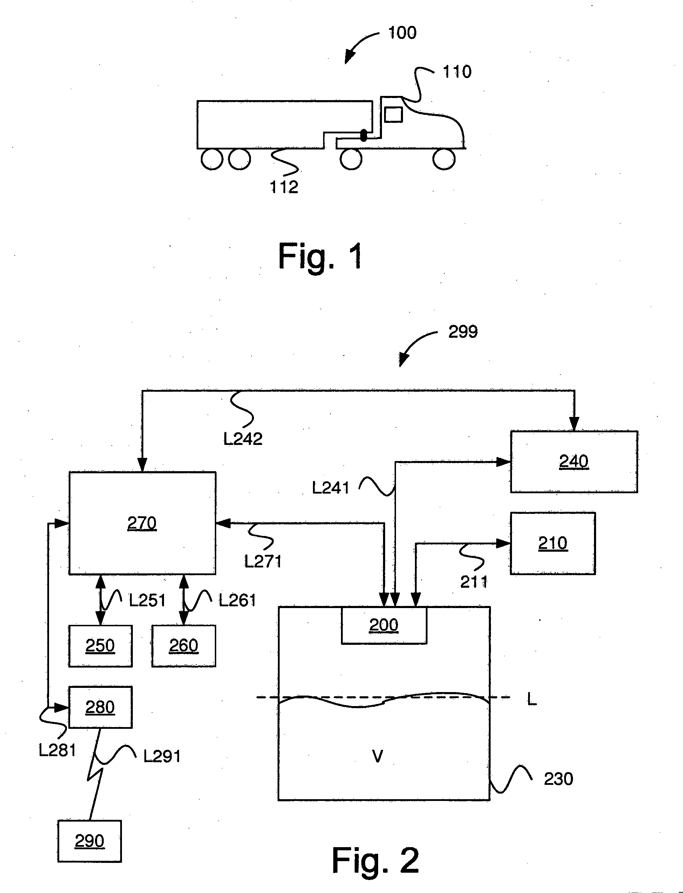

Figure 1 depicts a side view of a vehicle 100. The exemplified vehicle 100 comprises a tractor unit 110 with a trailer 112. The vehicle can be a heavy vehicle, such as a truck or bus. The vehicle can alternatively be a car.

The term "link" herein refers to a communication link that may be a physical connection such as an opto-electronic communication line, or a non-physical connection such as a wireless connection, e.g. a radio link or microwave link.

The term "non-mechanical level sensor" herein refers to a level sensor which uses non-mechanical functionality to detect an existing quantity of fuel in the fuel tank of a vehicle, e.g. detection by means of light or sound. One example of a mechanical level sensor is a so-called float gauge, where a float is arranged around a rod in the tank to detect an existing quantity of fuel in the tank.

The term "fuel quantity" herein refers to a measurement of the quantity of fuel in a fuel tank of the vehicle. The quantity of fuel can be shown as a fuel level in the tank or as a fuel volume. A detected fuel level can be easily converted to an equivalent fuel volume, and vice versa. In some respects, the terms "fuel quantity", "fuel level" and "fuel volume" can be different expressions of the same quantity.

Figure 2 depicts a subsystem 299 of the vehicle 100. The subsystem 299 is arranged in the tractor unit 110.

The subsystem 299 comprises a fuel tank 230. The fuel tank 230 is adapted to hold fuel, such as petrol, diesel or ethanol. Said fuel is intended to be supplied to a combustion engine (not depicted) in the vehicle. The fuel tank 230 can be adapted to hold any appropriate maximum volume of fuel. Where said motor vehicle is a car, the fuel tank 230 can be adapted to hold a maximum of, e.g. 70 litres. Where said motor vehicle is a truck, the fuel tank 230 can be adapted to hold a maximum of, e.g. 1500 litres.

A fuel-level sensor 200 is adapted to detect an existing quantity of fuel in the fuel tank 230. Said fuel-level sensor 200 is adapted to determine an existing quantity of fuel in the fuel tank 230.

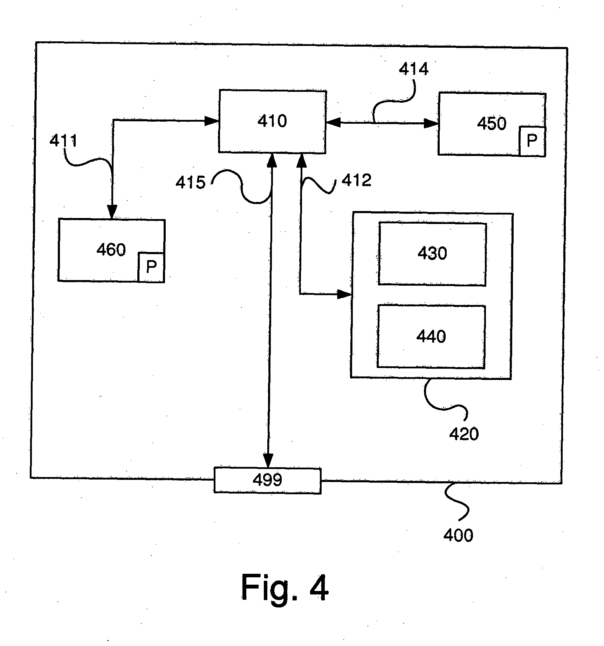

The fuel level sensor 200 comprises a calculating device, depicted in further detail in Figure 4. The fuel-level sensor 200 can be adapted to detect an existing fuel level L in the tank. Said calculating device is adapted to calculate and determine a corresponding existing volume of fuel V in the tank 230, using routines and parameters stored in a memory. A parameter can comprise information on the fuel tank's 230 geometric configuration. In this way, each given fuel level L in the tank 230 corresponds to a volume of fuel V determined empirically in advance. In this way, with appropriate adaptations, the innovative method can thus be applied to different tanks with different respective geometric configurations. The fuel-level sensor 200 is adapted to determine an existing fuel level L in the tank 230 even when the fuel is disturbed and/or the vehicle is tilting relevant to a reference plane.

The fuel-level sensor 200 can be adapted to continuously determine an existing fuel level L in the tank 230. The fuel level sensor 200 can be adapted to continuously detect and determine an existing fuel level L in the tank 230. The fuel-level sensor 200 can be adapted to intermittently detect and determine an existing fuel level L in the tank 230. The fuel-level sensor 200 can be adapted to detect and determine an existing fuel level L in the tank 230 at any appropriate frequency, e.g. 1, 10 or 100Hz. Other possible frequencies can include once per minute or every ten minutes.

The fuel-level sensor 200 can be adapted to determine whether an existing fuel quantity in the tank 230 is being changed abnormally or otherwise. For this, a first-order time derivative dV/dt of a fuel volume V in the tank 230 can be applied. Where it is established that dV/dt exceeds a preset threshold value Th, it can be established that said existing fuel volume V is being changed in an abnormal way. Where it is established that dV/dt is below said preset threshold value Th, it can be established that said existing fuel volume V is being changed in a normal way, e.g. through normal operation of the vehicle's combustion engine.

Where the vehicle is switched off, a comparison between a detected fuel level L1 at a first time t1 and detected fuel level L2 at a second time can be carried out. Said first time t1 and said second time t2 can be any appropriate time and differ by a time interval of, e.g. 5, 30 or 60 seconds. As no or negligible fuel consumption should occur in this case, it can be determined whether a fuel volume V in the tank 230 is being changed in an abnormal way or otherwise. If L1 is essentially the same as L2, it can be determined that said fuel volume V in the tank 230 is being changed in a normal way, i.e. not at all or only negligibly. If L2 is less or substantially less than L1, it can be determined that said fuel volume V in the tank 230 is being changed in an abnormal way, e.g. due to a fuel theft that is being carried out or has been carried out.

Said fuel-level sensor 200 can be a so-called ultrasonic sensor which can detect an existing fuel volume V in the tank 230 by means of ultrasonic elements. This can occur by continuously or intermittently transmitting ultrasonic signals and receiving reflected ultrasonic signals. The fuel-level sensor 200 is adapted to calculate and determine an existing fuel volume V in the tank 230 based on said transmitted ultrasonic signals and said reflected ultrasonic signals.

According to an alternative embodiment, said fuel-level sensor is adapted to detect an existing fuel volume V in the tank 230 by means of sound waves at any appropriate frequency, amplitude and duration configuration.

Said fuel-level sensor 200 can be a so-called light sensor which can detect an existing fuel volume V in the tank 230 by means of light elements. This can occur by continuously or intermittently transmitting light signals and receiving reflected light signals. The fuel-level sensor 200 is adapted to calculate and determine an existing fuel volume V in the tank 230 based on said transmitted light signals and said reflected light signals.

According to one embodiment, said fuel-level sensor is adapted to detect an existing fuel volume V in the tank 230 by means of light waves at any appropriate frequency, amplitude and duration configuration.

According to one embodiment, said fuel-level sensor 200 is attached to a roof of the fuel tank 230. Said fuel-level sensor 200 can alternatively be pre-attached to a wall of the fuel tank 230. According to one embodiment, said fuel-level sensor 200 can be pre-attached to the bottom of the fuel tank 230.

The fuel-level sensor 200 is adapted to communicate with an alarm system 270 via a link L271.

The fuel-level sensor 200 is adapted to generate a signal S1 and transmit it directly to the alarm system 270 via the link L271. Said signal S1 can comprise information on an existing condition in the fuel tank 230. Said signal S1 can comprise information on whether an existing fuel quantity in the tank 230 is being changed normally or otherwise. Said signal can comprise detailed information on the rate of change of fuel volume V, detection schedules or other desired information calculated or otherwise determined by the fuel-level sensor 200. According to one embodiment, signal S1 comprises no information which can be interpreted to mean that no change to the existing fuel quantity has been determined.

According to one example, said signal S1 is only transmitted when the fuel-level sensor 200 has determined that a fuel level L in the fuel tank has been changed in an abnormal way.

The alarm system 270 can be any suitable alarm system. The alarm system 270 is adapted to receive signals S1 from the fuel-level sensor 200 via the link L271. The alarm system 270 is adapted to process the information in signal S1. The alarm system 270 is adapted to determine whether alarms should be triggered based on the information in signal S1. The alarm system 270 is adapted to determine which type of alarm or which combination of alarms should be triggered. The alarm system 270 is adapted to determine when a possible alarm should be triggered directly or with a certain delay. The alarm system 270 is adapted to determine when a possible alarm should be terminated. According to one example, the alarm system 270 is adapted to terminate an activated alarm when a fuel quantity in the fuel tank is no longer being changed in an abnormal way. According to a second example, the alarm system is adapted to terminate an activated alarm after a preset period of time has elapsed from the time said activation was initiated, e.g. 10, 30 or 60 minutes. According to a further example, the alarm system 270 is adapted to terminate an activated alarm when a manual action is taken, e.g. when a driver of the vehicle switches off the alarm using a signal switch. Said switch can be adapted for wireless communication with said alarm system 270.

The alarm system 270 is adapted to communicate with the sound-alarm element 250 via a link L251. The sound-alarm element 250 can comprise one or more sound-emitting means, such as amplifiers, loudspeakers and/or horns or similar. Said sound-alarm element 250 is adapted, where appropriate, to generate sound signals at any appropriate frequency, amplitude and duration configuration. Said sound-alarm element 250 is intended to scare away perpetrators when an ongoing fuel theft is detected or at least call the attention of the general public or the authorities to the fact that a fuel theft is being carried out or has been carried out. According to one embodiment, a sound signal equivalent to a burglar alarm is triggered by means of said sound-alarm element 250. This could take the form of a loud, intermittent, high-frequency sound causing discomfort to the human ear.

According to one example embodiment, the alarm system 270 is adapted to communicate with the light-alarm element 260 via a link L261. The light-alarm element 260 can comprise one or more light-emitting means, such as spotlights, light sirens or similar. Said light-alarm element 260 is adapted, where appropriate, to generate light signals at any appropriate frequency, amplitude and duration configuration. Said light-alarm element 260 is intended to scare away perpetrators when an ongoing fuel theft is detected or at least call the attention of the general public or the authorities to the fact that a fuel theft is being carried out or has been carried out. According to one embodiment, a light signal equivalent to a burglar alarm is triggered by means of said light-alarm element 260. This could take the form of a flashing white light which may have a blinding or irritating effect on the human eye.

According to one example embodiment, the alarm system 270 is adapted with an antenna (not depicted) to communicate with an alarm configuration 280 via a link L281. Said antenna is adapted to transmit an alarm signal at an appropriate frequency, amplitude and duration configuration to the alarm configuration 280, for example via a satellite. Said alarm configuration 280 can be arranged in an alarm control centre. The alarm control centre can be a manned alarm control centre, e.g. at a security company or police agency that can take measures to interrupt the fuel theft or track the perpetrators. According to one embodiment, said alarm configuration 280 can be adapted to communicate with an electronic unit 290 via a link L291. In this way, said alarm configuration 280 can be adapted to automatically transmit a notification to the electronic unit 290, e.g. a mobile telephone in the possession of a driver or vehicle owner. In this way, a driver or owner can be informed at an early stage if a fuel theft is being carried out or has recently been carried out. This can be advantageous, e.g. when the driver is sleeping in a cab of the vehicle 100.

The fuel-level sensor 200 is connected to a power source 210 via a cable 211. The power source 210 can be an existing vehicle battery. The power source 210 is adapted to connect the fuel-level sensor 200 to a power supply. The power source 210 can be a battery which is not said existing vehicle battery but a battery the sole purpose of which is to connect the fuel-level sensor 200 to a power supply. The power source 210 can be any appropriate power source in the vehicle. The power source 210 can be arranged externally to the fuel-level sensor 200 using said connecting cable 211. According to one embodiment, said power source is integrated into said fuel-level sensor 200.

The fuel-level sensor: 200 is adapted to communicate with a control unit 240 via a link L241. The control unit 240 is adapted to communicate with the alarm system 270 via a link L242. The fuel-level sensor 200 can be adapted to transmit said signals S1 to the control unit 240. The control unit 240 can, inter alia, be adapted to control the vehicle's engine. The control unit 240 is adapted to be off when the vehicle is switched off. In this way, electricity consumption can be reduced over time.

According to one aspect of the invention, said signals S1 are transmitted directly to the alarm system 270 without, according to state of the art embodiments, sending signals S1 to the control unit 240. In this way, the control unit 240 can be off when the vehicle is switched off, instead of either being activated by connection to a power supply or being continuously connected to a power supply and thereby activated.

According to one embodiment, it is however possible to use the control unit 240 as a further transmission element. In this way, the control unit 240 is adapted to receive said signals S1 from the fuel-level sensor via the link L241 and to further transmit these signals S1 to the alarm system 270 via the link L242. This is advantageous when the link L271 is unusable, e.g. due to sabotage during a fuel theft. It should be noted that no processing of the signals S1 or the information therein is carried out by the control unit 240 according to this example embodiment.

The fuel-level sensor 200 is adapted to detect the abnormal removal of fuel from a fuel tank of a motor vehicle. The fuel-level sensor 200 is adapted to continuously detect changes in the fuel quantity in the tank 230 to determine whether said fuel quantity is being changed normally or otherwise. The fuel-level sensor 200 is adapted to transmit a signal S1 if said fuel quantity is changed abnormally. The fuel-level sensor 200 is adapted to detect the fuel level L in said tank 230 e.g. using sound or light at any appropriate frequency, amplitude and duration configuration and is in this way is also adapted to determine whether said fuel quantity is being changed normally or otherwise. The fuel-level sensor 200 is adapted to generate and transmit the signal S1 to an existing alarm system 270 in the vehicle 100. The fuel-level sensor 200 is adapted to continuously or intermittently transmit said signal S1. The fuel-level sensor 200 is adapted to encrypt said signal S1. The alarm system 270 is adapted to decrypt said encrypted signal S1. According to one aspect of the invention, any appropriate encryption algorithm can be used for this purpose.

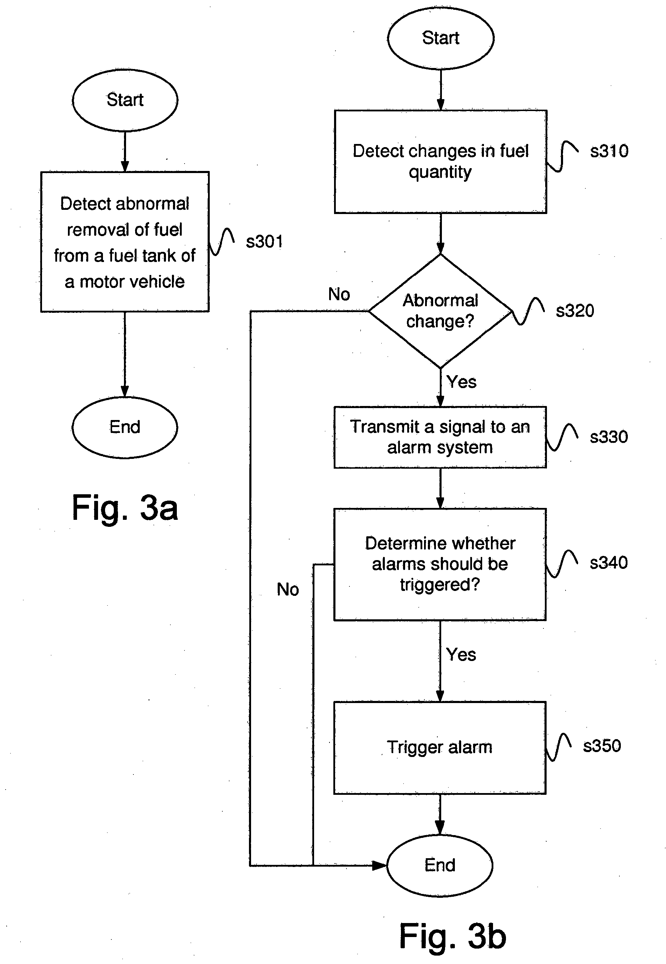

Figure 3a schematically illustrates a flowchart of a method for detecting the abnormal removal of fuel from a fuel tank of a motor vehicle, according to one embodiment of the invention. The method comprises a first method step s301. The step s301 comprises the steps of:
- continuously detecting changes in the fuel quantity in said tank to determine whether said fuel quantity is being changed normally or otherwise;
- emitting a signal if said fuel quantity is changed abnormally;
- detecting the fuel level in said tank using a non-mechanical level sensor adapted to determine whether said fuel quantity is being changed normally or otherwise;
- transmitting said signal using said level sensor to an existing alarm system in the vehicle. The method ends after step s301.

Figure 3b schematically illustrates in further detail a flowchart of a method for detecting the abnormal removal of fuel from a fuel tank 230 of a motor vehicle 100, according to one embodiment of the invention.

The method comprises a first method step s310. The method step s310 comprises the step of detecting changes in the fuel quantity in the tank 230 to determine whether said fuel quantity is being changed normally or otherwise. This can be performed by a non-mechanical sensor, e.g. an ultrasonic sensor 200. Said changes in the fuel quantity can occur continuously or intermittently. Method step s310 is followed by a subsequent method step s320.

The method step s320 comprises the step of determining whether a change in the fuel quantity in the tank 230 is abnormal or otherwise. This can be performed by taking account of whether the vehicle is in operation, e.g. if it is idling. If this is the case, a compensation for the fuel being consumed by a motor in the vehicle can be carried out. Compensation can also be carried out for other components in the vehicle operated by means of fuel from the tank 230. The step of determining whether a change in the fuel quantity in the tank 230 is abnormal or otherwise can be performed on the basis of a preset criterion, e.g. a rate of change of an existing fuel quantity in the fuel tank can be considered over a preset time interval. It should be noted that it is the fuel-level sensor 200 which determines in this case whether a fuel theft is being carried out or otherwise. The information contained in the signal S1 may therefore indicate that a fuel theft has been initiated, is being carried out or has been carried out, depending e.g. on the detection frequency in the fuel-level sensor.

It the change is abnormal, i.e. the result is positive, a subsequent method step s330 is carried out. If the change in the fuel quantity in the tank 230 is not abnormal, i.e. the result is negative, the method ends.

The method step s330 comprises the step of transmitting a signal S1 to the alarm system 270. Said signal S1 can be transmitted directly to the alarm system 270. The step s330 can also comprise the step of generating said signal S1 and thereby collating the appropriate information. Said information is intended to form the decision basis for the alarm system 270. Said signal S1 can also be encrypted according to one embodiment of the invention.

According to one alternative, a signal S1 can also be transmitted to the alarm system 270 when the change in the fuel quantity in the tank 230 is normal. In this way, it can be indicated that a normal state prevails. This can be advantageous in that a continuous update is performed indicating that a signal contact between the fuel-level sensor 200 and the alarm system 270 exists.

Method step s330 is followed by a subsequent method step s340.

The method step s340 comprises the step of determining whether an alarm should be triggered by the alarm system 270. This can be performed in various ways. The step of determining whether an alarm should be triggered can be performed on the basis of different parameters. According to one embodiment, it can be determined that an alarm should be activated immediately. This can be appropriate if a fuel theft is ongoing. According to one embodiment, it can be determined that an alarm should be activated with a certain time lag. This can be advantageous when a driver is in the immediate vicinity, e.g. sleeping in a vehicle cab in the vehicle. In this way, it should be possible to avoid a confrontation between the perpetrator and the driver. According to one embodiment, it can be determined that an alarm should not be activated, even if the fuel-level sensor 200 has determined that a change in the fuel quantity in the fuel tank is abnormal. This can be advantageous in a case where the vehicle is inconveniently located and when the impact of an activate alarm on persons or equipment in the surroundings would be too negative.

The step of determining whether an alarm should be triggered also comprises the step, in the event that alarms should be triggered, of determining which alarms should be triggered. The step of determining whether an alarm should be triggered also comprises the step, in the event alarm should be triggered, of determining how said alarm should be triggered, e.g. by determining the frequency, amplitude and duration configuration of an alarm from the sound-alarm device 250 or the light-alarm device 260.

If it is determined that an alarm should not be triggered, the method ends. If it is determined that an alarm should be triggered, directly or after a certain delay, a subsequent method step s350 is carried out.

The method step s350 comprises the step of triggering an alarm by means of said alarm system 270, e.g. comprising the sound-alarm element 250, the light-alarm element 260 and/or the antenna. The alarm system 270 is adapted to control the activation and action of the triggered alarm.

The method ends after method step s350.

Figure 4 depicts a diagram of one embodiment of a device 400. According to the invention the fuel-level sensor 200 described with reference to e.g. Figure 2, comprises the device 400.

The device 400 comprises a non-volatile memory 420, a data processing unit 410 and a read/write memory 450. The device 400 can also refer to a calculating device. The non-volatile memory 420 has a first memory element 430 in which a computer programme, e.g. an operating system, is stored for controlling the function of the device 400. The device 400 further comprises a bus controller, a serial communication port, I/O means, an A/D converter, a time and date input and transmission unit, an event counter and an interruption controller (not depicted). The non-volatile memory 420 has also a second memory element 440.

As the device 400 is arranged in the fuel-level sensor 200, a computer programme P is provided comprising routines for detecting the abnormal removal of fuel from a fuel tank of a motor vehicle The programme P comprises routines for continuously detecting changes in the fuel quantity in said tank to determine whether said fuel quantity is being changed normally or otherwise. The programme P comprises routines for triggering a signal S1 if said fuel quantity is being changed abnormally. The programme P comprises routines for detecting the fuel level in said tank using a non-mechanical level sensor adapted to determine whether said fuel quantity is being changed normally or otherwise. The programme P comprises routines for transmitting said signal S1 using said level sensor to an existing alarm system 270 in the vehicle 100. The programme P comprises routines for encrypting said signal S1 before it is sent to the alarm system 270.

## Claims

1. Method for detecting the abnormal removal of fuel from a fuel tank (230) of a motor vehicle (100; 110), comprising the steps of:
- continuously detecting (s330) changes in the fuel quantity in said tank (230) to determine whether said fuel quantity is being changed normally or otherwise;
- transmitting (s320) a signal (S1) if said fuel quantity is changed abnormally,
- detecting a fuel level (L) in said tank (230) by means of a non-mechanical level sensor (200),
**characterized in that**
said non-mechanical level sensor (200) is equipped with a logic system adapted to determine (s320) whether said fuel quantity is being changed normally or otherwise,
wherein in case the vehicle is operating, said non-mechanical level sensor (200) uses a first-order time derivative dV/dt of a fuel volume V in the tank (230) and,
if said non-mechanical level sensor (200) establishes that dV/dt exceeds a preset threshold value Th, said non-mechanical level sensor (200) establishes that said existing fuel volume is being changed in an abnormal way, and said non-mechanical level sensor (200) generates said signal (S1), or,
wherein in case the vehicle is switched off, said non-mechanical level sensor (200) compares a detected fuel level L1 at a first time t1 and a detected fuel level L2 at a second time t2, and if said non-mechanical level sensor (200) determines that L2 is less or substantially less than L1, said non-mechanical level sensor (200) establishes that said fuel volume V in the tank 230 is being changed in an abnormal way, and said non-mechanical level sensor (200) generates said signal (S1); and
wherein said non-mechanical level sensor (200) directly transmits (s330) said signal (S1) to an existing alarm system (270) in the vehicle (100; 110).

2. Method according to claim 1, further comprising the step of:
- detecting said fuel level (L) by means of an ultrasonic sensor (200).

3. Method according to claim 1 or 2, further comprising the step of:
- continuously transmitting said signal (S1).

4. Method according to any one of claims 1-3, where said signal (S1) comprises only the result of said determination.

5. Method according to any one of the foregoing claims, where said signal (S1) is encrypted.

6. Method according to any one of the foregoing claims, where said signal (S1) comprises information on changes in said fuel quantity per unit of time.

7. Method according to any one of the foregoing claims, further comprising the step of:
- determining (s340) whether alarms should be triggered by means of the alarm system (270).

8. Method according to any one of the foregoing claims, further comprising the step of:
- triggering alarms (s350) by means of sound and/or light in the vehicle (100; 110).

9. Method according to any one of the foregoing claims, further comprising the step of:
- triggering alarms (s350) by means of a signal to an alarm configuration (280) arranged at a distance from the vehicle (100; 110).

10. Device for detecting the abnormal removal of fuel from a fuel tank (230) of a motor vehicle (100; 110), comprising:
- elements for continuously detecting changes in the fuel quantity in said tank (230) to determine whether said fuel quantity is being changed normally or otherwise;
- an element for transmitting a signal (S1) if said fuel quantity is being changed abnormally,
wherein said elements are formed by a non-mechanical level sensor (200),
**characterised in that:**
said non-mechanical level sensor (200) comprises as a logic system a calculating device (400) adapted to determine whether said fuel quantity is being changed normally or otherwise;
wherein in case the vehicle is in operation, said logic system is adapted to use a first-order time derivative dV/dt of a fuel volume V in the tank (230) and, wherein said said logic system is adapted to establish that dV/dt exceeds a preset threshold value Th, such that said logic system can establish that said existing fuel volume is being changed in an abnormal way and such that said said logic system is adapted to generate said signal (S1), or,
wherein in case the vehicle is switched off, said logic system is adapted to compare a detected fuel level L1 at a first time t1 and a detected fuel level L2 at a second time t2, and if said logic system determines that L2 is substantially less than L1, said said logic system is adapted to establish that said fuel volume V in the tank (230) is being changed in an abnormal way and said logic system is adapted to generate said signal (S1); and
wherein said fuel sensor (200) is adapted to transmit said signal (S1) directly to an existing alarm system (270) in the vehicle (100; 110).

11. Device according to claim 10, where said elements (200; 400) for detecting said fuel level (L) are an ultrasonic sensor (200).

12. A device according to claim 10 or 11, further comprising:
- elements (200; 400) for continuously transmitting said signal (S1).

13. Device according to any one of claims 10-12, where said signal (S1) comprises only the result of said determination.

14. Device according to any one of the claims, further comprising:
- elements (200; 400) for encrypting said signal (S1).

15. Device according to any one of claims 10-14, further comprising:
- elements (200; 400) for determining information on changes in said fuel quantity per unit of time, and
- elements (200; 400) for collating said information in said signal (S1).

16. Device according to any one of claims 10-15, where
- said alarm system (270) is adapted to determine whether alarms should be triggered.

17. Device according to any one of claims 10-16, further comprising:
- elements (270; 250; 260) for triggering alarms by means of sound and/or light in the vehicle (100; 110).

18. Device according to any one of the foregoing claims, further comprising:
- element (270) for triggering alarms by means of a signal to an alarm configuration (280) arranged at a distance from the vehicle (100; 110).

19. Motor vehicle (100; 110) comprising a device according to any one of claims 10-18.

20. A motor vehicle (100; 110) according to claim 19, which motor vehicle is any from among a truck, bus or car.

## Patentansprüche

1. Verfahren zum Erkennen der abnormalen Entnahme von Kraftstoff aus einem Kraftstofftank (230) eines Kraftfahrzeugs (100; 110), das die Schritte aufweist:
- kontinuierliches Erkennen (s330) von Änderungen der Kraftstoffmenge in diesem Tank (230) um zu bestimmen, ob sich die Kraftstoffmenge normal oder anderweitig ändert;
- Senden (s320) eines Signals (S1), wenn sich die Kraftstoffmenge abnormal ändert;
- Erkennen eines Kraftstoffpegels (L) im Tank (230) mittels eines nichtmechanischen Pegelsensors (200),
**dadurch gekennzeichnet, dass**
der nichtmechanische Pegelsensor (200) mit einem Logiksystem ausgestattet ist, das zum Bestimmen (s320) eingerichtet ist, ob sich die Kraftstoffmenge normal oder anderweitig ändert,
wobei in dem Fall, in dem das Fahrzeug betrieben wird, der nichtmechanische Pegelsensor (200) eine zeitliche Ableitung erster Ordnung dV/dT eines Kaftstoffvolumens V im Tank (230) anwendet, und dann,
wenn der nichtmechanische Pegelsensor (200) bestimmt, dass dV/dT einen voreingestellten Schwellenwert Th überschreitet, der nichtmechanische Pegelsensor (200) bestimmt, dass sich das vorhandene Kraftstoffvolumen abnormal ändert, und der nichtmechanische Pegelsensor (200) das Signal (S1) erzeugt, oder wobei in dem Fall, in dem das Fahrzeug abgeschaltet ist, der nichtmechanische Pegelsensor (200) einen erkannten Kraftstoffpegel L1 in einem ersten Zeitpunkt t1 mit einem erkannten Kraftstoffpegel L2 in einem zweiten Zeitpunkt t2 vergleicht, und dann, wenn der nichtmechanische Pegelsensor (200) bestimmt, dass L2 niedriger oder erheblich niedriger ist als L1, der nichtmechanische Pegelsensor (200) bestimmt, dass sich des Kraftstoffvolumen V im Tank (230) auf eine abnormale Weise ändert, und der nichtmechanische Pegelsensor (200) das Signal (S1) erzeugt; und
wobei der nichtmechanische Pegelsensor (200) das Signal (S1) direkt an ein vorhandenes Alarmsystem (270) im Fahrzeug (100; 110) sendet (S330).

2. Verfahren nach Anspruch 1, das ferner den Schritt aufweist:
- Erkennen des Kraftstoffpegels (L) mittels eines Ultraschallsensors (200).

3. Verfahren nach Anspruch 1 oder 2, das ferner den Schritt aufweist:
- kontinuierliches Senden des Signals (S1).

4. Verfahren nach einem der Ansprüche 1 bis 3, wobei das Signal (S1) nur das Ergebnis der Bestimmung aufweist.

5. Verfahren nach einem der vorigen Ansprüche, wobei das Signal (S1) verschlüsselt ist.

6. Verfahren nach einem der vorigen Ansprüche, wobei das Signal (S1) Informationen über Änderungen der Kraftstoffmenge pro Zeiteinheit aufweist.

7. Verfahren nach einem der vorigen Ansprüche, das ferner den Schritt aufweist:
- Bestimmen (s340), ob Alarme mittels des Alarmsystems (270) ausgelöst werden sollten.

8. Verfahren nach einem der vorigen Ansprüche, das ferner den Schritt aufweist:
- Auslösen von Alarmen (s350) mittels Schall und/oder Licht im Fahrzeug (100; 110).

9. Verfahren nach einem der vorigen Ansprüche, das ferner den Schritt aufweist:
- Auslösen von Alarmen (s350) mittels eines Signals an eine Alarmkonfiguration (280), die beabstandet vom Fahrzeug (100; 110) angeordnet ist.

10. Vorrichtung zum Erkennen der abnormalen Entnahme von Kraftstoff aus einem Kraftstofftank (230) eines Kraftfahrzeugs (100; 110), mit:
- Elementen zum kontinuierlichen Erkennen von Änderungen der Kraftstoffmenge im Behälter (230), um zu bestimmen, ob sich die Kraftstoffmenge normal oder anderweitig ändert;
- einem Element zum Senden eines Signals (S1), wenn sich die Kraftstoffmenge abnormal ändert,
wobei die Elemente von einem nichtmechanischen Pegelsensor (200) gebildet werden,
**dadurch gekennzeichnet, dass**
der nichtmechanische Pegelsensor (200) als ein Logiksystem ein Rechengerät (400) aufweist, das zum Bestimmen eingerichtet ist, ob sich die Kraftstoffmenge normal oder anderweitig ändert,
wobei in dem Fall, in dem das Fahrzeug betrieben wird, das Logiksystem eingerichtet ist, eine zeitliche Ableitung erster Ordnung dV/dT eines Kaftstoffvolumens V im Tank (230) anzuwenden, und wobei das Logiksystem eingerichtet ist, zu bestimmen, dass dV/dT einen voreingestellten Schwellenwert Th überschreitet, so dass das Logiksystem bestimmen kann, dass sich das vorhandene Kraftstoffvolumen abnormal ändert, und so dass das Logiksystem zum Erzeugen des Signals (S1) eingerichtet ist, oder
wobei in dem Fall, in dem das Fahrzeug abgeschaltet ist, das Logiksystem eingerichtet ist, einen erkannten Kraftstoffpegel L1 in einem ersten Zeitpunkt t1 mit einem erkannten Kraftstoffpegel L2 in einem zweiten Zeitpunkt t2 zu vergleichen, und wenn das Logiksystem bestimmt, dass L2 erheblich niedriger ist als L1, das Logiksystem eingerichtet ist, zu bestimmen, dass sich das Kraftstoffvolumen V im Tank (230) auf eine abnormale Weise ändert, und das Logiksystem eingerichtet ist, das Signal (S1) zu erzeugen; und
wobei der Pegelsensor (200) eingerichtet ist, das Signal (S1) direkt an ein vorhandenes Alarmsystem (270) im Fahrzeug (100; 110) zu senden.

11. Vorrichtung nach Anspruch 10, wobei die Elemente (200; 400) zum Erkennen des Kraftstoffpegels (L) ein Ultraschallsensor (200) sind.

12. Vorrichtung nach Anspruch 10 oder 11, ferner mit
- Elementen (200; 400) zum kontinuierlichen Senden des Signals (S1).

13. Vorrichtung nach einem der Ansprüche 10 bis 12, wobei das Signal (S1) nur das Ergebnis der Bestimmung aufweist

14. Vorrichtung nach einem der Ansprüche 10 bis 13, ferner mit
- Elementen (200; 400) zum Verschlüsseln des Signals (S1).

15. Vorrichtung nach einem der Ansprüche 10 bis 14, ferner mit
- Elementen (200; 400) zum Bestimmen von Informationen über Änderungen der Kraftstoffmenge pro Zeiteinheit, und
- Elementen (200; 400) zum Sammeln der Informationen im Signal (S1).

16. Vorrichtung nach einem der Ansprüche 10 bis 15, wobei
- das Alarmsystem (270) eingerichtet ist, zu bestimmen, ob Alarme ausgelöst werden sollten.

17. Vorrichtung nach einem der Ansprüche 10 bis 16, ferner mit
- Elementen (270; 250; 260) zum Auslösen von Alarmen mittels Schall und/oder Licht im Fahrzeug (100; 110).

18. Vorrichtung nach einem der Ansprüche 10 bis 17, ferner mit
- einem Element (270) zum Auslösen von Alarmen mittels eines Signals an eine Alarmkonfiguration (280), die beabstandet vom Fahrzeug (100; 110) angeordnet ist.

19. Kraftfahrzeug (100; 110), das eine Vorrichtung nach einem der Ansprüche 10 bis 18 aufweist.

20. Kraftfahrzeug (100; 110) nach Anspruch 19, wobei das Kraftfahrzeug entweder ein Lastkraftwagen, ein Bus oder ein Personenkraftfahrzeug ist.

## Revendications

1. Procédé de détection de l'extraction anormale de carburant d'un réservoir (230) de carburant d'un véhicule (100 ; 110) à moteur, comprenant les étapes de :
- détection continue (s330) de changements de la quantité de carburant dans ledit réservoir (230) pour déterminer si ladite quantité de carburant est changée normalement ou autrement ;
- transmission (s320) d'un signal (S1) si ladite quantité de carburant est changée anormalement,
- détection d'un niveau (L) de carburant dans ledit réservoir (230) au moyen d'un capteur (200) non mécanique de niveau,
**caractérisé en ce que**
ledit capteur (200) non mécanique de niveau est équipé avec un système logique adapté à déterminer (s320) si ladite quantité de carburant est changée normalement ou autrement,
dans lequel, dans le cas où le véhicule est en fonctionnement, ledit capteur (200) non mécanique de niveau utilise une dérivée temporelle de premier ordre dV/dt d'un volume V de carburant dans le réservoir (230) et,
si ledit capteur (200) non mécanique de niveau établit que dV/dt excède une valeur de seuil Th prédéfinie, ledit capteur (200) non mécanique de niveau établit que ledit volume de carburant existant est changé d'une manière anormale, et ledit capteur (200) non mécanique de niveau génère ledit signal (S1), ou,
dans lequel, dans le cas où le véhicule est coupé, ledit capteur (200) non mécanique de niveau compare un niveau de carburant détecté L1 à un premier instant t1 et un niveau de carburant détecté L2 à un deuxième instant t2, et si ledit capteur (200) non mécanique de niveau détermine que L2 est inférieur ou sensiblement inférieur à L1, ledit capteur (200) non mécanique de niveau établit que ledit volume V de carburant dans le réservoir 230 est changé d'une manière anormale, et ledit capteur (200) non mécanique de niveau génère ledit signal (S1) ; et
dans lequel ledit capteur (200) non mécanique de niveau transmet directement (s330) ledit signal (S1) à un système d'alarme (270) existant dans le véhicule (100 ; 110).

2. Procédé selon la revendication 1, comprenant en outre l'étape de :
- détection dudit niveau (L) de carburant au moyen d'un capteur (200) à ultrasons.

3. Procédé selon la revendication 1 ou 2, comprenant en outre l'étape de :
- transmission continue dudit signal (S1).

4. Procédé selon l'une quelconque des revendications 1 à 3, où ledit signal (S1) comprend uniquement le résultat de ladite détermination.

5. Procédé selon l'une quelconque des revendications précédentes, où ledit signal (S1) est crypté.

6. Procédé selon l'une quelconque des revendications précédentes, où ledit signal (S1) comprend des informations sur des changements de ladite quantité de carburant par unité de temps.

7. Procédé selon l'une quelconque des revendications précédentes, comprenant en outre l'étape de :
- détermination (s340) si des alarmes doivent être déclenchées au moyen du système d'alarme (270).

8. Procédé selon l'une quelconque des revendications précédentes, comprenant en outre l'étape de :
- déclenchement d'alarmes (s350) au moyen d'un son et/ou d'une lumière dans le véhicule (100 ; 110).

9. Procédé selon l'une quelconque des revendications précédentes, comprenant en outre l'étape de :
- déclenchement d'alarmes (s350) au moyen d'un signal à une configuration (280) d'alarme agencée à distance du véhicule (100 ; 110).

10. Dispositif de détection de l'extraction anormale de carburant d'un réservoir (230) de carburant d'un véhicule (100 ; 110) à moteur, comprenant :
- des éléments pour détecter de façon continue des changements de la quantité de carburant dans ledit réservoir (230) pour déterminer si ladite quantité de carburant est changée normalement ou autrement ;
- un élément pour transmettre un signal (S1) si ladite quantité de carburant est changée anormalement,
dans lequel lesdits éléments sont formés par un capteur (200) non mécanique de niveau,
**caractérisé en ce que** :
ledit capteur (200) non mécanique de niveau comprend comme un système logique un dispositif (400) de calcul adapté à déterminer si ladite quantité de carburant est changée normalement ou autrement ;
dans lequel, dans le cas où le véhicule est en fonctionnement, ledit système logique est adapté à utiliser une dérivée temporelle de premier ordre dV/dt d'un volume V de carburant dans le réservoir (230) et dans lequel ledit système logique est adapté à établir que dV/dt excède une valeur de seuil Th prédéfinie, de telle sorte que ledit système logique peut établir que ledit volume de carburant existant est changé d'une manière anormale et de telle sorte que ledit système logique est adapté à générer ledit signal (S1), ou
dans lequel, dans le cas où le véhicule est coupé, ledit système logique est adapté à comparer un niveau de carburant détecté L1 à un premier instant t1 et un niveau de carburant détecté L2 à un deuxième instant t2, et si ledit système logique détermine que L2 est sensiblement inférieur à L1, ledit système logique est adapté à établir que ledit volume V de carburant dans le réservoir (230) est changé d'une manière anormale et ledit système logique est adapté à générer ledit signal (S1) ; et
dans lequel ledit capteur (200) de carburant est adapté à transmettre ledit signal (S1) directement à un système d'alarme (270) existant dans le véhicule (100 ; 110).

11. Dispositif selon la revendication 10, où lesdits éléments (200 ; 400) pour détecter ledit niveau (L) de carburant sont un capteur (200) à ultrasons.

12. Dispositif selon la revendication 10 ou 11, comprenant en outre :
- des éléments (200 ; 400) pour transmettre de façon continue ledit signal (S1).

13. Dispositif selon l'une quelconque des revendications 10 à 12, où ledit signal (S1) comprend uniquement le résultat de ladite détermination.

14. Dispositif selon l'une quelconque des revendications, comprenant en outre :
- des éléments (200 ; 400) pour crypter ledit signal (S1).

15. Dispositif selon l'une quelconque des revendications 10 à 14, comprenant en outre :
- des éléments (200 ; 400) pour déterminer des informations sur des changements de ladite quantité de carburant par unité de temps, et
- des éléments (200 ; 400) pour collationner lesdites informations dans ledit signal (S1).

16. Dispositif selon l'une quelconque des revendications 10 à 15, où
- ledit système d'alarme (270) est adapté à déterminer si des alarmes doivent être déclenchées.

17. Dispositif selon l'une quelconque des revendications 10 à 16, comprenant en outre :
- des éléments (270 ; 250 ; 260) pour déclencher des alarmes au moyen d'un son et/ou d'une lumière dans le véhicule (100 ; 110).

18. Dispositif selon l'une quelconque des revendications précédentes, comprenant en outre :
- un élément (270) pour déclencher des alarmes au moyen d'un signal à une configuration (280) d'alarme agencée à distance du véhicule (100 ; 110).

19. Véhicule (100 ; 110) à moteur comprenant un dispositif selon l'une quelconque des revendications 10 à 18.

20. Véhicule (100 ; 110) à moteur selon la revendication 19, lequel véhicule à moteur est l'un quelconque parmi un camion, un bus ou une voiture.
